# EUROPÄISCHE PATENTSCHRIFT

(11) **EP 4 384 718 B1**
(45) Veröffentlichungstag und Bekanntmachung des Hinweises auf die Patenterteilung: **03.09.2025**
(21) Anmeldenummer: 22757216.1
(22) Anmeldetag: 20.07.2022
(51) Int. Cl.: F16B 5/07, F16B 21/08, F16B 1/00

(54) **BEFESTIGUNGSSYSTEM**
FASTENING SYSTEM
SYSTÈME DE FIXATION

(30) Priorität: 14.08.2021 DE 102021004176
(43) Veröffentlichungstag der Anmeldung: 19.06.2024
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Kohler Schmid Möbus Patentanwälte
(86) Internationale Anmeldenummer: PCT/EP2022/070327
(87) Internationale Veröffentlichungsnummer: WO 2023/020772

(56) Entgegenhaltungen:
- JP-U- H0 664 591
- US-A- 3 777 435
- US-A1- 2015 158 437
- US-B1- 6 254 304
- US-B2- 10 292 460

## Beschreibung

Die Erfindung betrifft ein Befestigungssystem für Profilteile, bestehend aus einem Profilteil und einem anderen Profilteil sowie mindestens zwei Befestigungskomponenten, die jeweils Haftverschlussteile aufweisen, die unter Bildung eines Haftverschlusses in wieder lösbarer Weise in Eingriff miteinander bringbar sind, wobei die eine Befestigungskomponente dem einen Profilteil und die andere Befestigungskomponente dem anderen Profilteil zuordenbar ist.

Dahingehende Befestigungssysteme sind für eine Vielzahl von Anwendungsfällen bekannt. So betrifft DE 10 2012 000 196 A1 ein Verfahren zum Herstellen eines Befestigungssystems nebst einem solchen Befestigungssystem, die dem Festlegen von Bauelementen fotovoltaischer Anlagen an Dachflächen bei Gebäuden dienen, wobei in einem ersten Schritt eine Trägerfläche bereitgestellt wird, auf der mindestens eine Befestigungskomponente, bestehend aus Haftverschlussteilen in Form von Schlaufen- und/oder sonstigen Verhakungselementen aufgebracht wird, die nach Festlegen der jeweiligen Befestigungskomponente im Montagezustand der Trägerfläche das Anbringen zumindest einer weiteren korrespondierenden Befestigungskomponente erlaubt, die, mit sonstigen Verhakungselementen versehen, die wieder lösbare Verbindung der zuordenbaren Befestigungskomponenten ermöglicht. Unabhängig vom jeweiligen Oberflächentyp der Anbringfläche oder Dachfläche als dem einen Profilteil steht so an der Oberseite der Trägerfläche als dem anderen Profilteil für die Anbringung der Befestigungskomponente eine geeignete Verbindungsfläche zur Verfügung, so dass als Befestigungskomponente Haftverschlussteile beliebigen, gewünschten Aufbaus einfach und sicher angebracht werden können.

Durch DE 10 2012 017 529 A1 ist ein profilartiges Abdecksystem für Isolationseinrichtungen an Bau- und Tragwerken bekannt mit einem Befestigungssystem, bestehend aus einer Trägerfläche, die Haftverschlussteile aufweist, die mit korrespondierend ausgebildeten Haftverschlussteilen verbind-bar sind, wobei auf der den Haftverschlussteilen abgewandten Seite der Trägerfläche eine reaktive Funktionsfläche als weitere Komponente des Verbindungssystems angebracht ist, die unter vorgebbarem Formgebungsdruck und einer vorgebbaren Reaktionstemperatur mit einem geschlossenzelligen Schaummaterial der jeweiligen Isolationseinrichtung sich dauerhaft verbindet. Dergestalt lässt sich eine sichere Verbindung der Trägerfläche als dem einen Profilteil mit plattenförmigen Bauteilen als den anderen Profilteilen realisieren, selbst wenn diese eine für übliche Klebeverbindungen ungünstige Oberflächenbeschaffenheit aufweisen sollten. Die US 10 292 460 B2 offenbart ein Befestigungssystem mit Haftverschlussteilen. Weitere Befestigungssysteme sind aus der US 6 254 304 B1, der JP H06 64591 U, der US 3 777 435 A und der US 2015/158437 A1 bekannt geworden.

Bei diesen bekannten Lösungen werden regelmäßig in Form von Bahnen und mithin sehr großflächig die jeweiligen Haftverschlussteile der beiden Befestigungskomponenten mit den zuordenbaren Profilteilen fest verbunden, so dass in großen Mengen Haftverschlussmaterial zum Einsatz gebracht wird, was entsprechend kostenintensiv ist. Auch liegen vor dem eigentlichen Verbindungsvorgang der beiden korrespondierenden Haftverschlussteile zweier Befestigungskomponenten unter Bildung des üblichen wieder lösbaren Haftverschlusses diese frei zur Umgebung hin offen, was den Eintrag von Verschmutzungen in das Verschlussmaterial erlaubt, das die spätere Anhaftfähigkeit verringert, wobei die Verschmutzung bis zum Unbrauchbarwerden des eingesetzten Verschlussmaterials führen kann.

Ausgehend von diesem Stand der Technik liegt der Erfindung die Aufgabe zugrunde, ein Befestigungssystem für Profilteile zu schaffen, mit dem sich die dahingehenden Nachteile vermeiden lassen.

Eine dahingehende Aufgabe löst ein Befestigungssystem mit den Merkmalen des Patentanspruches 1 in seiner Gesamtheit.

Dadurch, dass gemäß dem kennzeichnenden Teil des Patentanspruches 1 die eine Befestigungskomponente als Einschiebeteil für eine Ausnehmung im zugeordneten einen Profilteil konzipiert, eine Verschlusszone aufweist, die in Einschubrichtung der Befestigungskomponente gesehen, randseitig mit zwei Begrenzungsstreifen versehen ist, die eine Unterhakmöglichkeit bilden bei einer Aufnahme in kanalartige Öffnungen in der Ausnehmung des einen Profilteils, die zwischen sich die Verschlusszone freilassen zum Festlegen der Haftverschlussteile der anderen Befestigungskomponente an den Haftverschlussteilen der einen Befestigungskomponente, lässt sich mit einem sehr geringen Materialeinsatz an Verschlussmaterial eine wirksame Verhaftung von Profilteilen nahezu jedweder Art aneinander erreichen. Die Einschiebeteile mit den Haftverschlussteilen sind clusterartig über das eine Profilteil an vorgebbaren Festlegepositionen verteilt, so dass am Profilteil einzelne punkt- oder spotartige Festlegepositionen mit vorgebbarem Abstand voneinander definiert sind, die das Festlegen des anderen Profilteiles über die zugeordnete weitere Befestigungskomponente ermöglichen, die gleichfalls am anderen Profilteil bei entsprechender Anordnung clusterartig verteilt sein kann. Aufgrund dieser Clusteranordnung mit einer Vielzahl einzelner punktförmiger Befestigungskomponenten, lässt sich das bekannte bahnartige großflächige Verlegen von Verschlussmaterial vermeiden, was aufgrund der dann benötigten reduzierten Einsatzmenge an Verschlussmaterial die Kosten deutlich reduzieren hilft; dennoch ist insoweit eine hoch feste Verbindung von Befestigungskomponenten nebst Profilteilen erreichbar, so dass auch bei einem harten Materialeinsatz wie er regelmäßig auf Baustellen, beispielsweise im Rahmen herzustellender Betonverschalungen als Profilteile, vorkommt ein sicheres Aneinanderlegen der Profilteile erreicht ist. Trotz dieser sicher herstellbaren Festlegeverbindung lassen sich an den einzelnen Festlegepunkte die Profilteile auch wieder mit relativ geringen Betätigungskräften voneinander lösen, so dass im Versagens- respektive im Austauschfall von Profilteilen diese gegen Neuelemente ohne Weiteres zeitnah getauscht werden können. Dies hat so keine Entsprechung im Stand der Technik.

Das Befestigungssystem ist dadurch gekennzeichnet, dass ein Paar Linienelemente auf der Oberseite eines Begrenzungsstreifens verlaufen, die in Richtung der Haftverschlussteile vorspringen, die von zwei weiteren Linienelementen auf der gegenüberliegenden Unterseite begrenzt sind, von denen ein Linienelement entlang des freien Längsrandes des zugeordneten Befestigungsstreifens verläuft und das weitere Linienelement auf der gegenüberliegenden Seite mit den Haftverschlussteilen im randnahen Bereich am Übergang zwischen den Haftverschlussteilen und dem benachbarten Begrenzungsstreifen angeordnet ist.

Bei einer bevorzugten Ausführungsform des erfindungsgemäßen Befestigungssystems ist vorgesehen, dass das Einschiebeteil an seiner einen freien Stirnseite, die dem Auslauf der Ausnehmung im eingeschobenen Zustand zugewandt ist, einen bogenförmigen, vorzugsweise kreissegmentförmigen Verlauf hat, der in Richtung der beiden Begrenzungsstreifen in jeweils einer Schräge ausläuft. Dergestalt lässt sich hemmnisfrei und ohne zusätzlichen Einsatz von Festlegemitteln wie Klebstoff das jeweilige Einschiebeteil am Profilteil festlegen und dort werkzeugfrei fixieren. Der bogenförmige Verlauf erlaubt darüber hinaus eine selbstständige Positionierung des Einschiebeteils innerhalb der Ausnehmung. Des Weiteren kann im Bedarfsfall zu Reinigungszwecken am Profilteil nach dessen Gebrauch das Einschiebeteil auch wieder aus der Ausnehmung entfernt werden. Dies kommt der Umwelt zugute, wenn regelmäßig ein aus Holzwerkstoff bestehendes Profilteil an anderer Stelle zu entsorgen ist, als das regelmäßig aus Kunststoffmaterial aufgebaute Einschiebeteil. Im Rahmen dieses Befestigungskonzepts ist in vorteilhafter Weise vorgesehen, dass das Einschiebeteil an seiner anderen freien Stirnseite die am Eingang der Ausnehmung ausmündet, bündig mit Profilteilen des einen Profilteils abschließt.

Bei einer weiteren besonders bevorzugten Ausführungsform des erfindungsgemäßen Befestigungssystems ist vorgesehen, dass die beiden Begrenzungsstreifen mit ihren jeweiligen Längsrändern entlang den kanalartigen Öffnungen von Wandteilen des einen Profilteils unter Bildung der Unterhakmöglichkeit zumindest teilweise übergriffen sind und entlang ihrer Ober-und/oder Unterseite einzelne Vorsprünge aufweisen.

Dank der kanalartigen Öffnungen, die eine Unterhakmöglichkeit für das Einschiebeteil ausbilden, ist eine Längsführung für das Einschiebeteil geschaffen, mit der sich dieses in einfacher Weise in Position innerhalb der Ausnehmung des Profilteils bringen lässt. Die einzelnen Vorsprünge dienen dabei je nach Art ihrer Anbringung der Aussteifung des an sich flexibel aus gestalteten Einschiebeteils und erhöhen die Festlegekräfte im Rahmen der Unterhakung innerhalb der kanalartigen Öffnungen des Profilteils. Vorzugsweise ist dabei vorgesehen, dass die einzelnen Vorsprünge zumindest teilweise im Bereich der kanalartigen Öffnungen verlaufen und vorzugsweise aus von der Ober- und/oder Unterseite vorspringenden Linienelementen gebildet sind, die parallel zu den Längsrändern der Begrenzungsstreifen verlaufen. Dank der angesprochenen Linienelemente erfolgt die Aussteifung für das Einschiebeteil insbesondere in Längsausrichtung, sprich in Verfahrrichtung innerhalb der kanalartigen Öffnungen.

Erfindungsgemäß ist dabei vorgesehen, dass ein Paar Linienelemente auf der Oberseite eines Begrenzungsstreifens verlaufen, die in Richtung der Haftverschlussteile vorspringen, die von zwei weiteren Linienelementen auf der gegenüberliegenden Unterseite begrenzt sind, von denen ein Linienelement entlang des freien Längsrandes des zugeordneten Befestigungsstreifens verläuft und das weitere Linienelement auf der gegenüberliegenden Seite mit den Haftverschlussteilen im randnahen Bereich am Übergang zwischen den Haftverschlussteilen und dem benachbarten Begrenzungsstreifen angeordnet ist. Aufgrund der teilweise alternierenden Anordnung der Linienelemente auf gegenüberliegenden Seiten eines jeden Begrenzungsstreifens ist dergestalt auch in einer Queranordnung quer zum kanalartigen Öffnungsverlauf eine Aussteifung für das Einschiebeteil erreicht, was durch die in der Verschlusszone angeordneten Haftverschlussteile noch verstärkt wird.

Bei einer bevorzugten Ausführungsform des erfindungsgemäßen Befestigungssystems ist weiter vorgesehen, dass die Haftverschlussteile der einen Befestigungskomponente aus einem pilzkopfartigen Verschlussmaterial gebildet sind, das als plättchenartiger Zuschnitt konzipiert auf einem Basisteil des Einschiebeteiles zwischen den beiden Begrenzungsstreifen auf einer Festlegeplatte des Einschiebeteiles stationär angeordnet ist. Aufgrund der plättchenartigen Konfektionierung des Verschlussmaterials lässt sich dieses an anderer Stelle auch im Rahmen einer permanent verlaufenden Bahnfertigung erstellen, um dann anschließend die spezielle bogenförmige Zuschnittsform im Rahmen eines Stanz- oder Schnittvorgangs zu erhalten, um dann in einem weiteren Herstellschritt die Verbindung mit den sonstigen Teilen des Einschiebeteils, insbesondere in Form eines Basis- oder Trägerteils, durchzuführen. Dergestalt lässt sich auf besonders kostengünstige Weise das Einschiebeteil als Bestandteil des Befestigungssystems erhalten.

Bei einer weiteren bevorzugten Ausführungsform des erfindungsgemäßen Befestigungssystems ist vorgesehen, dass die eine Befestigungskomponente derart in paralleler Richtung zu ihren Haftverschlussteilen vertieft in der Ausnehmung des einen Profilteils aufgenommen ist, dass die andere Befestigungskomponente des anderen Profilteils mit ihren Haftverschlussteilen in wieder lösbarem Eingriff derart in der Ausnehmung versenkt ist, dass angrenzende, benachbarte Wandteile der beiden Profilteile in Anlage miteinander sind. Durch diese vertiefte Anordnung lassen sich die miteinander
zu verbindenden Profilteile bündig aneinander festlegen, so dass auch im Rahmen eines harten Baustelleneinsatzes kein Schmutz ungewollt zwischen die Profilteile gelangen kann.

Bei einer weiteren bevorzugten Ausführungsform des erfindungsgemäßen Befestigungssystem ist vorgesehen, dass die andere Befestigungskomponente mit dem zugehörigen Profilteil über eine Verrastung verbindbar ist und an ihrer verbleibenden freien Kopfseite mit einem pilzkopfartigen Verschlussmaterial versehen ist, das dem pilzkopfartigen Verschlussmaterial des Einschiebeteils entspricht. Durch diese hermaphroditische Ausbildung des Verschlussmaterials unter Einsatz pilzkopfartiger Verbindungsmittel auf beiden Seiten lassen sich sehr hohe Haft- und Schälfestigungswerte erreichen. Des Weiteren ist ein dahingehend geschlossener Verschluss relativ unempfindlich gegenüber dem Einleiten von seitlichen Scherkräften, so dass die angestrebte Verbindungslösung erschütterungs- und rüttelfest ist, was eine Rolle spielen kann, sofern das Befestigungssystem mit seinen Profilteilen im Betrieb Vibrationen ausgesetzt ist.

Die Erfindung betrifft des Weiteren eine Befestigungskomponente gemäß Anspruch 9, vorgesehen für ein Befestigungssystem wie vorstehend vorgestellt, mit einem pilzkopfartigen Verschlussmaterial, das als flächenförmiger Zuschnitt Bestandteil eines Trägerteils ist, wobei das Trägerteil als Einschiebe-teil konzipiert randseitig mit zwei Begrenzungsstreifen versehen ist, die eine Unterhakmöglichkeit bilden und wobei das Einschiebeteil zumindest an seinem einen freien Ende einen bogenförmigen Abschluss aufweist, der in Richtung der beiden Begrenzungsstreifen in jeweils einer angrenzenden Schräge ausmündet ; und dass ein Paar Linienelemente auf der Oberseite eines Begrenzungsstreifens verlaufen, die in Richtung der Haftverschlussteile vorspringen, die von zwei weiteren Linienelementen auf der gegenüberliegenden Unterseite begrenzt sind, von denen ein Linienelement entlang des freien Längsrandes des zugeordneten Befestigungsstreifens verläuft und das weitere Linienelement auf der gegenüberliegenden Seite mit den Haftverschlussteilen im randnahen Bereich am Übergang zwischen den Haftverschlussteilen und dem benachbarten Begrenzungsstreifen angeordnet ist.

Die dahingehende Befestigungskomponente lässt sich in kostengünstiger Weise in sehr hoher Stückzahl erstellen, und kann erst vor Ort mit den einschlägigen Profilteilen verbunden werden, so dass insoweit ein hohes Maß an Modularität für das Befestigungssystem mit den Profilteilen als Ganzes erreicht ist.

Im Folgenden wird das erfindungsgemäße Befestigungssystem anhand einer Ausführungsform nach der Zeichnung näher erläutert. Dabei zeigen in prinzipieller und nicht maßstäblicher Darstellung die
- Figuren 1 und 2: einmal in Draufsicht, einmal in Seitenansicht die eine als Einschiebeteil ausgebildete Befestigungskomponente mit den vorstehenden pilzkopfartigen Haftverschlussteilen
- Figur 3: in der Art einer Explosionszeichnung ein Profilteil mit zwei vertieft angeordneten Ausnehmungen für das Einschieben des im Zeichnungsvordergrund exemplarisch dargestellten Einschiebeteils nach den Figuren 1 und 2, wobei gemäß der Darstellung die beiden Ausnehmungen bereits von einem solchen Einschiebeteil belegt sind;
- Figur 4: in perspektivischer Draufsicht die weitere Befestigungskomponente mit fußseitigem Verrastungsteil und kopfseitig vorstehendem pilzartigen Verschlussmaterial;
- Figur 5: ein weiteres als Hohlkasten konzipiertes Profilteil mit zwei kreisrunden Öffnungen auf der Oberseite für den rastenden Eingriff der darüber angeordneten Befestigungskomponenten wie sie Gegenstand der Figur 4 sind;
- Figur 6: den Verbindungszustand von dem einen Profilteil nach der Figur 3 mit dem weiteren Profilteil nach der Figur 5; und
- Figur 7: in perspektivischer Draufsicht exemplarisch ein Bearbeitungswerkzeug in der Art eines Schneidfräsers zum Herstellen der Ausnehmungen im Profilteil nach der Figur 3.

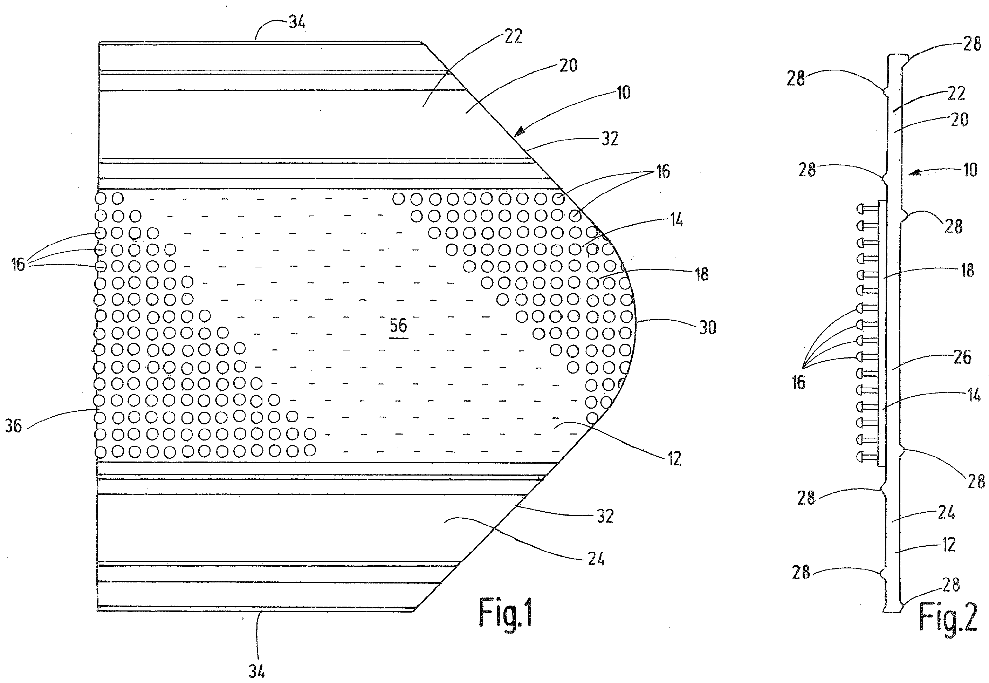

Die Figuren 1 und 2 zeigen in Draufsicht bzw. in einer Seitenansicht eine Befestigungskomponente 10 eines Befestigungssystems für Profilteile, wobei die dahingehende Befestigungskomponente 10 als Einschiebeteil 12 ausgebildet ist. Das Einschiebeteil 12 weist einen mittleren Längsstreifen 14 auf, auf dem einzelne Haftverschlussteile 16 vorstehen in Form eines pilzkopfartigen Verschlussmaterials. Die pilzkopfartigen Haftverschlussteile 16 der einen einschiebfähigen Befestigungskomponente 10 sind als plättchenartiger Zuschnitt 18 konzipiert und beispielsweise aus einem laufenden Bahnmaterial durch Ausschneiden oder Ausstanzen erhalten. Der dahingehende Zuschnitt 18 mit den Haftverschlussteilen 16 lässt sich im Rahmen eines Spritzgießverfahrens, eines Chill-Roll-Verfahrens oder im Rahmen eines 3D-Drucks erhalten. Weitere Herstellmöglichkeiten sind denkbar, beispielsweise unter Einsatz eines Siebdruckverfahrens und dergleichen mehr. Der Zuschnitt 18 ist auf einem Basisteil 20 des Einschiebeteils 12 zwischen zwei Begrenzungsstreifen 22, 24 angeordnet, die zwischen sich eine Festlegeplatte 26 in einstückiger Ausgestaltung aufspannen, auf die der Zuschnitt 18 mit den Haftverschlussteilen 16 aufgesetzt, insbesondere aufgeklebt ist. Im Rahmen moderner Herstellverfahren ist es aber auch möglich, das gesamte Einschiebeteil 12 mit seinen Haftverschlussteilen 16 einstückig auszugestalten

Wie sich des Weiteren aus den Figuren 1 und 2 ergibt, sind einzelne Vorsprünge auf der Ober- und der Unterseite des Einschiebeteils 12 angeordnet. Diese bestehen aus einstückig am Basisteil 20 angeformten Linienelementen 28, wobei ein paar Linienelemente 28 auf der Oberseite eines jeden Begrenzungsstreifens 22, 24 verlaufen, die in Richtung der zugeordneten Haftverschlussteile 16 vorspringen, jedoch nicht über die Höhe des Längsstreifens 14 vorstehen. Des Weiteren sind für jeden Begrenzungsstreifen 22, 24 auf dessen Unterseite und paarweise einander zugeordnet zwei weitere Linienelemente 28 vorhanden, wobei das jeweils am äußersten Längsrand des Begrenzungsstreifens 22, 24 angeordnete Linienelement 28 bündig mit den Längsseiten des Basisteils 22 abschließt. Die verbleibenden beiden Linienelemente 28 stützen auf der Unterseite des Basisteils 20 den gegenüberliegenden Zuschnitt 18 mit den vorstehenden Haftverschlussteilen 16 in Richtung einer Positionier- oder Auflagefläche ab, was im Folgen den noch näher gezeigt werden wird.

Wie sich weiter aus der Figur 1 ergibt, besitzt das Einschiebeteil 12 an seiner einen freien Stirnseite 30 einen bogenförmigen, vorzugsweise kreisförmigen Verlauf, der in Richtung der beiden benachbarten Begrenzungsstreifen 22, 24 stirnseitig in jeweils einer Schräge 32 ausläuft. Die dahingehende Schräge 32 schließt mit der jeweiligen äußeren Seitenwand 34 eines Begrenzungsstreifens 22, 24 einen Winkel von im Wesentlichen 145° ein und die kreissegmentförmige Ausbuchtung des Einschiebeteils 12 liegt im Bereich des Auslaufs der beiden Schrägen 32 im Bereich zwischen den beiden unmittelbar benachbarten Längsrändern 28 auf der Unterseite des Einschiebeteils 12.

Des Weiteren mündet das Einschiebeteil 12 auf seiner anderen freien Stirnseite 36 in einem ebenen Querwandverlauf aus, der senkrecht auf den Seitenwänden 34 steht. Demgemäß durchgreift jedes Linienelement 28 als Vorsprung des Einschiebeteils 12 das zugehörige Basisteil 20 durchgehend und mündet endseitig an den beiden gegenüberliegenden freien Stirnseiten 30, 36 aus. Die pilzkopfartigen Haftverschlussteile 16 sind regelmäßig in Reihen und Spalten auf dem Zuschnitt 18 verteilt und können je nach angestrebter Verbindungstechnologie auch anders ausgestaltet sein, beispielsweise in Form von Haken und/oder Schlaufen. Des Weiteren können anstelle der Linienelemente 28 auch andere Vorsprünge, beispielsweise in Form von Noppen (nicht dargestellt), vorgesehen sein.

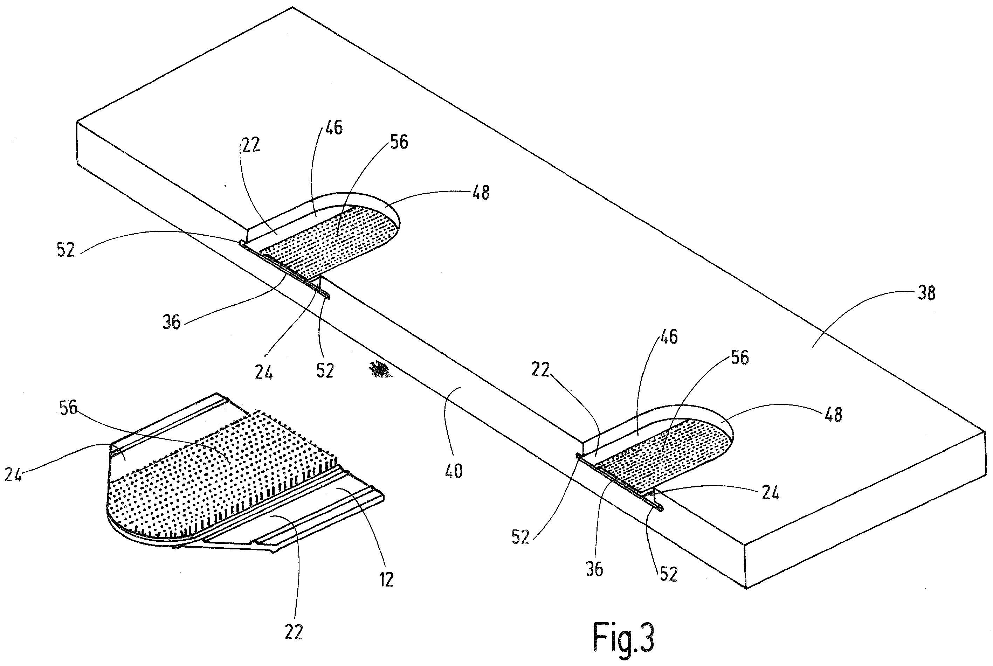

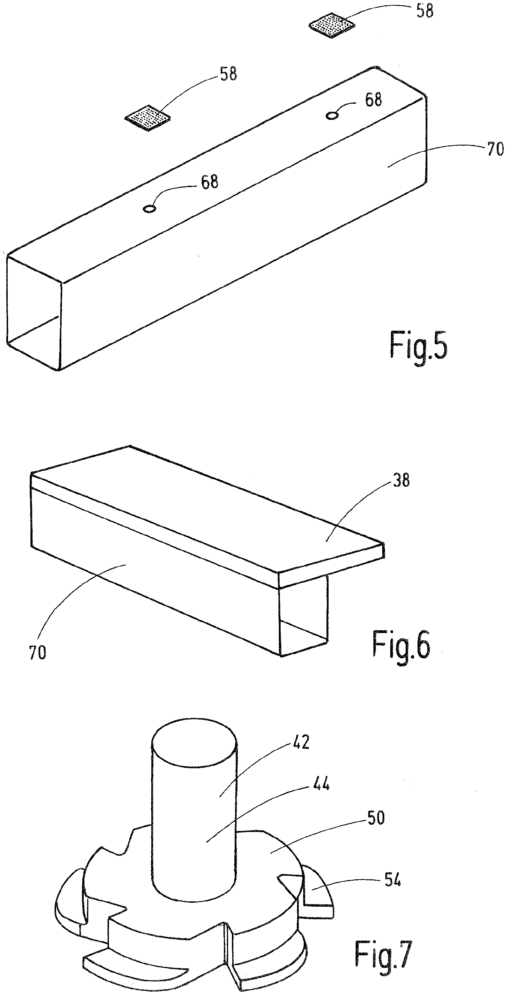

Figur 3 zeigt nun ein quaderförmiges Profilteil 38, das bevorzugt aus Holz auch in Laminatbauweise ausgebildet sein kann. Das dahingehende Profilteil 28 ist nur exemplarisch gezeigt und kann im Grunde auch jede andere Form nebst Größenabmessung aufweisen. In die zunächst geschlossene vordere Stirnseite 40 wird mittels des in Figur 7 dargestellten Fräswerkzeugs 42, das über eine Antriebsachse 44 in Rotation versetzt werden kann, Ausbuchtungen oder Ausnehmungen 46 nach der Figur 3 hergestellt, wobei die mittlere kreisförmige Ausbuchtung 48 einer jeden Ausnehmung 46 von dem oberen Schneidkreis 50 des Fräswerkzeugs 42 nach der Figur 7 hergestellt wird und zwei gegenüberliegende parallel zueinander verlaufende kanalartige Öffnungen 52 in der Ausnehmung 46 werden von dem unteren Schneidkreis 54 des Schneidwerkzeugs 42 erzeugt. Sowohl oberer Schneidkreis 50 als auch unterer Schneidkreis 54 verfügen über übliche Herstell-schneiden, wobei der untere Schneidkreis 54 im Durchmesser zum Herstellen der kanalartigen Öffnungen 52 im Durchmesser gegenüber dem oberen Schneidkreis 50 entsprechend verbreitert ist.

Über die paarweisen kanalartigen Öffnungen 52 einer jeden Ausnehmung 46 im Profilteil 38 lässt sich dann ein Einschiebeteil 12 entlang seiner Be grenzungsstreifen 22, 24 einschieben, wobei dergestalt die kanalartigen Öffnungen 52 eine Unterhakmöglichkeit für den Randbereich eines jeden Begrenzungsstreifens 22, 24 bieten. Dergestalt kommt die Unterseite des Einschiebeteils 12 in zumindest teilweiser Anlage mit dem Grund der Ausnehmung 46 in Form der nach oben hin freigelassenen Positionier- oder Auflagefläche. Für ein definiertes Festlegen des jeweiligen Einschiebeteils 12 in der zugeordneten Ausnehmung 46 ist vorgesehen, dass die beiden an jedem Begrenzungsstreifen 22, 24 zuäußerst angeordneten, gegenüberliegenden Linienelemente 28 in klemmende Anlage mit den Wandteilen der kanalartigen Öffnungen 52 auf der Oberseite und der Unterseite kommen. Dergestalt lässt sich ohne zusätzlichen Klebstoff eine sichere Verankerung des jeweiligen Einschiebeteils 12 und mithin der Befestigungskomponente 10 in dem einen Profilteil 38 erreichen, wobei unter Bildung einer Verschlusszone 56 die Haftverschlussteile 16 nach oben hin und vertieft in der Ausnehmung 46 angeordnet freiliegen. Der stirnseitige bogenförmige Verlauf des Einschiebeteils kommt dabei in Anlage mit der kreissegmentförmigen Ausbuchung 48 einer jeden Ausnehmung 46 an ihrem insoweit gebildeten Auflageboden, der parallel zur Oberseite und Unterseite des Profilteils 38 ausgerichtet ist. Die beiden Schrägen 32 des Einschiebeteils 12 folgen dabei im Wesentlichen dem bogenförmigen Auslauf zu den parallel zueinander verlaufenden Seitenwänden einer jeden Ausnehmung 46 nach. Dergestalt ist es auch möglich, durch Entfernen eines jeden Einschiebeteils 12 von Hand oder mit Unterstützung entsprechender Handhabungshilfen das Profilteil 38 von den eingesetzten Einschiebeteilen 12 im Bedarfsfall wiederum zu trennen.

Die kreissegmentförmige Ausbuchtung 48 bildet also insoweit den Auslauf 48 der Ausnehmung 46 aus, an das das Einschiebeteil 12 mit seiner einen freien Stirnseite 30 im eingeschobenen Zustand angrenzt. Wie sich des Weiteren aus der Figur 3 ergibt, ist es vorgesehen, dass das Einschiebeteil 12 an seiner anderen freien Stirnseite 36 am Eingang der Ausnehmung 46 ausmündet und insoweit mit benachbarten Profilwänden des einen Profilteils 38 abschließt. Das dahingehende Profilteil 38, ergänzt um die beiden Einschiebeteile 12, ergibt insgesamt eine modulare Baukomponente, die im Zusammenwirken mit weiteren Bau- oder Profilteilen ein Gesamt-Befestigungssystem ergibt, was im Folgenden noch näher erläutert werden wird.

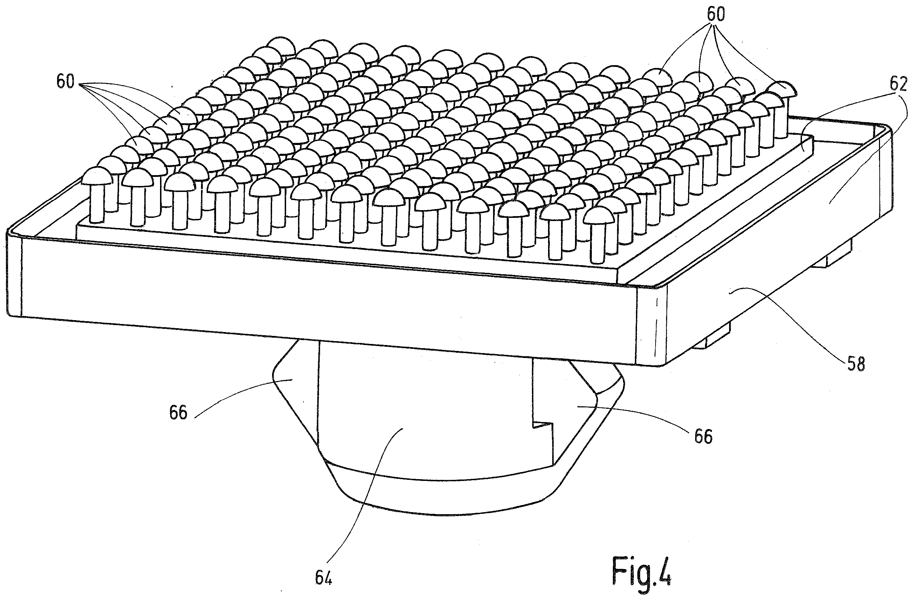

So zeigt die Figur 4 das Pendant zu der Befestigungskomponente 10 in Form des Einschiebeteils 12, die die andere Befestigungskomponente 58 betrifft. Derartige Befestigungskomponenten nach der Figur 4 sind bekannt und beispielsweise in der DE 10 2012 010 893 A1 näher aufgezeigt. So weist die Bestigungskomponente 58 in Blickrichtung auf die Figur 4 gesehen auf ihrer Oberseite pilzkopfartige Haftverschlussteile 60 auf, die auf einem quadratischen Träger 62 aufgesetzt sind, der an seiner Unterseite eine Verrastung 64 mit zwei diametral einander gegenüberliegenden, flexibel nachgiebigen Rastnasen 66 aufweist.

Wie sich insbesondere aus der Figur 5 ergibt, lässt sich über die Verrastung64 die jeweilige Befestigungskomponente 58 in Bohrungen 68 eines Hohlprofils als dem weiteren Profilteil 70 festlegen und über die Rastnasen 66 lösbar verrasten, indem diese zunächst eingerückt, elastisch wiederum ausrückend die obere Profilwand des Profilteils 70 kraftschlüssig untergreifen.

Dergestalt mit den weiteren beiden Befestigungskomponenten 58 ausgerüstet, lässt sich das weitere Profilteil 70 gemäß der Darstellung nach der Figur 6 mit dem Profilteil 38 in wieder lösbarer Weise verbinden, wobei die eine Befestigungskomponente 10 derart in paralleler Ausrichtung zu ihren Haftverschlussteilen 16 vertieft in der Ausnehmung des einen Profilteils 38 aufgenommen ist, dass die andere Befestigungskomponente 58 des anderen Profilteils 70 mit ihren Haftverschlussteilen 60 in wieder lösbarem Eingriff derart in der Ausnehmung 46 versenkt ist, dass angrenzende benachbarte Wandteile der beiden Profilteile 38, 70 gemäß der Darstellung nach der Figur 6 in unmittelbarer Anlage miteinander sind.

Mit dem erfindungsgemäßen Befestigungssystem nebst zugehörigen Befestigungskomponenten 10, 58 sind spotartige Befestigungspunkte mit Profilteilen 38, 70 unter Bildung eines modularen Profil-Baukastensystems verbind-bar, die sich aber wiederum von den Profilteilen für Säuberungs- und Entsorgungsvorgänge auch wieder zwanglos trennen lassen. Da Profilteile 38, 70 der genannten Art regelmäßig vor Ort, beispielsweise im Rahmen von Schalungselementen auf Baustellen aller Art, anzutreffen sind, ist mit den einzelnen Befestigungspunkten 10, 58 ein Nachrüsten von bereits vorhandenen Profilteilen zu deren Verbindung möglich, was ausgesprochen effizient und kostensparend ist.

## Patentansprüche

1. Befestigungssystem für Profilteile (38, 70), bestehend aus einem Profilteil (38) und einem anderen Profilteil (70) sowie mindestens zwei Befestigungskomponenten (10, 58), die jeweils Haftverschlussteile (16, 60) aufweisen, die unter Bildung eines Haftverschlusses in wieder lösbarer Weise in Eingriff miteinander bringbar sind, wobei die eine Befestigungskomponente (10) dem einen Profilteil (38) und die andere Befestigungskomponente (58) dem anderen Profilteil (70) zuordenbar ist, wobei die eine Befestigungskomponente (10) als Einschiebeteil (12) für eine Ausnehmung (46) im zugeordneten einen Profilteil (38) konzipiert eine Verschlusszone (56) aufweist, die in Einschubrichtung der Befestigungskomponente (10) gesehen, randseitig mit zwei Begrenzungsstreifen (22, 24) versehen ist, die eine Unterhakmöglichkeit bilden bei einer Aufnahme in kanalartige Öffnungen (52) in der Ausnehmung (46), die zwischen sich die Verschlusszone (56) freilassen zum Festlegen der Haftverschlussteile (60) der anderen Befestigungskomponente (58) an den Haftverschlussteilen (16) der einen Befestigungskomponente (10), **dadurch gekennzeichnet, dass** ein Paar Linienelemente (28) auf der Oberseite eines Begrenzungsstreifens (22, 24) verlaufen, die in Richtung der Haftverschlussteile (16) vorspringen, die von zwei weiteren Linienelementen (28) auf der gegenüberliegenden Unterseite begrenzt sind, von denen ein Linienelement (28) entlang des freien Längsrandes des zugeordneten Befestigungsstreifens (22, 24) verläuft und das weitere Linienelement (28) auf der gegenüberliegenden Seite mit den Haftverschlussteilen (16) im randnahen Bereich am Übergang zwischen den Haftverschlussteilen (16) und dem benachbarten Begrenzungsstreifen (22, 24) angeordnet ist.

2. Befestigungssystem nach Anspruch 1, **dadurch gekennzeichnet, dass** das Einschiebeteil (12) an seiner einen freien Stirnseite (30), die dem Auslauf (48) der Ausnehmung (46) im eingeschobenen Zustand zugewandt ist, einen bogenförmigen, vorzugsweise kreissegmentförmigen Verlauf hat, der in Richtung der beiden Begrenzungsstreifen (22, 24) in jeweils einer Schräge (32) ausläuft.

3. Befestigungssystem nach Anspruch 1 oder 2, **dadurch gekennzeichnet, dass** das Einschiebeteil (12) an seiner anderen freien Stirnseite (36), die am Eingang der Ausnehmung (46) ausmündet, bündig mit Profilwänden des einen Profilteils (38) abschließt.

4. Befestigungssystem nach einem der vorstehenden Ansprüche, **dadurch gekennzeichnet, dass** die beiden Begrenzungsstreifen (22, 24) mit ihren jeweiligen Längsrändern oder Seitenwänden (34) entlang den kanalartigen Öffnungen (52) von Wandteilen des einen Profilteils (38) unter Bildung der Unterhakmöglichkeit zumindest teilweise übergriffen sind und entlang ihrer Ober- und/oder Unterseite einzelne Vorsprünge aufweisen.

5. Befestigungssystem nach einem der vorstehenden Ansprüche, **dadurch gekennzeichnet, dass** die einzelnen Vorsprünge zumindest teilweise im Bereich der kanalartigen Öffnungen (52) verlaufen und vorzugsweise aus von der Ober- und/oder Unterseite vorspringenden Linienelementen (28) gebildet sind, die parallel zu den Seitenwänden (34) der Begrenzungsstreifen (22, 24) verlaufen.

6. Befestigungssystem nach einem der vorstehenden Ansprüche, **dadurch gekennzeichnet, dass** die Haftverschlussteile (16) der einen Befestigungskomponente (10) aus einem pilzkopfartigen Verschlussmaterial gebildet sind, das als plättchenartiger Zuschnitt (18) konzipiert auf einem Basisteil (20) des Einschiebeteiles (12) zwischen den beiden Begrenzungsstreifen (22, 24) auf einer Festlegeplatte (26) des Einschiebeteiles (12) stationär angeordnet ist.

7. Befestigungssystem nach einem der vorstehenden Ansprüche, **dadurch gekennzeichnet, dass** die eine Befestigungskomponente (10) derart in paralleler Richtung zu ihren Haftverschlussteilen (16) vertieft in der Ausnehmung (46) des einen Profilteils (38) aufgenommen ist, dass die andere Befestigungskomponente (58) des anderen Profilteils (70) mit ihren Haftverschlussteilen (60) in wieder lösbarem Eingriff derart in der Ausnehmung (46) versenkt ist, dass angrenzende, benachbarte Wandteile der beiden Profilteile (38, 70) in Anlage miteinander sind.

8. Befestigungssystem nach einem der vorstehenden Ansprüche, **dadurch gekennzeichnet, dass** die andere Befestigungskomponente (58) mit dem zugehörigen Profilteil (70) über eine Verrastung (64) verbindbar ist und an ihrer verbleibenden freien Kopfseite mit einem pilzkopfartigen Verschlussmaterial (60) versehen ist, das dem pilzkopfartigen Verschlussmaterial (16) des Einschiebeteils (12) entspricht.

9. Befestigungskomponente, vorgesehen für ein Befestigungssystem nach einem der vorstehenden Ansprüche, mit einem pilzkopfartigen Verschlussmaterial (16), das als flächenförmiger Zuschnitt (18) Bestandteil eines Basis- oder Trägerteils (20) ist, **dadurch gekennzeichnet, dass** das Basis- oder Trägerteil (20) als Einschiebeteil (12) konzipiert randseitig mit zwei Begrenzungsstreifen (22, 24) versehen ist, die eine Unterhakmöglichkeit bilden und dass das Einschiebeteil (12) zumindest an seiner einen freien Stirnseite (30) einen bogenförmigen Abschluss aufweist, der in Richtung der beiden Begrenzungsstreifen (22, 24) in jeweils einer angrenzenden Schräge (32) ausmündet; und dass ein Paar Linienelemente (28) auf der Oberseite eines Begrenzungsstreifens (22, 24) verlaufen, die in Richtung der Haftverschlussteile (16) vorspringen, die von zwei weiteren Linienelementen (28) auf der gegenüberliegenden Unterseite begrenzt sind, von denen ein Linienelement (28) entlang des freien Längsrandes des zugeordneten Befestigungsstreifens (22, 24) verläuft und das weitere Linienelement (28) auf der gegenüberliegenden Seite mit den Haftverschlussteilen (16) im randnahen Bereich am Übergang zwischen den Haftverschlussteilen (16) und dem benachbarten Begrenzungsstreifen (22, 24) angeordnet ist.

## Claims

1. Fastening system for profile parts (38, 70), consisting of one profile part (38) and another profile part (70) as well as at least two fastening components (10, 58), each having adhesive closure parts (16, 60) that can be brought into releasable engagement with one another, thereby forming an adhesive closure, wherein one fastening component (10) can be assigned to one profile part (38) and the other fastening component (58) can be assigned to the other profile part (70), wherein one fastening component (10), which is designed as an insertion part (12) for a recess (46) in the associated profile part (38) has a closure zone (56) which, viewed in the direction of insertion of the fastening component (10), is provided at the edge with two boundary strips (22, 24) which provide a possibility of hooked engagement below when received in channel-like openings (52) in the recess (46), the openings leaving the closure zone (56) free between them for fixing the adhesive closure parts (60) of the other fastening component (58) to the adhesive closure parts (16) of the one fastening component (10), **characterized in that** a pair of line elements (28) extend on the upper side of a boundary strip (22, 24) and project in the direction of the adhesive closure parts (16), which are bounded by two further line elements (28) on the opposite lower side, of which one line element (28) extends along the free longitudinal edge of the associated fastening strip (22, 24) and the other line element (28) is arranged on the opposite side with the adhesive closure parts (16) in the region close to the edge at the transition between the adhesive closure parts (16) and the adjacent boundary strip (22, 24).

2. Fastening system according to claim 1, **characterized in that** the insertion part (12) has, on its one free end side (30) facing the run-out (48) of the recess (46) in the inserted state, an arcuate, preferably circular-segment-like shape that runs out in the direction of the two boundary strips (22, 24) in a slope (32) in each case.

3. Fastening system according to claim 1 or 2, **characterized in that** the other free end side (36) of the insertion part (12), which opens out at the entrance to the recess (46), terminates flush with profile walls of the one profile part (38).

4. Fastening system according to one of the preceding claims, **characterized in that** the respective longitudinal edges or side walls (34) of the two boundary strips (22, 24) are at least partially overlapped along the channel-like openings (52) by wall parts of the one profile part (38), thereby forming the possibility of hooked engagement below, the boundary strips having individual projections along their upper side and/or lower side.

5. Fastening system according to one of the preceding claims, **characterized in that** the individual projections extend at least partially in the region of the channel-like openings (52) and are preferably formed by line elements (28) which project from the upper side and/or lower side and extend parallel to the side walls (34) of the boundary strips (22, 24).

6. Fastening system according to one of the preceding claims, **characterized in** the adhesive closure parts (16) of one fastening component (10) are formed from a mushroom-head-like closure material which is designed as a small plate-like blank (18) and is arranged in a stationary manner on a base part (20) of the insertion part (12) between the two boundary strips (22, 24) on a clamping plate (26) of the insertion part (12).

7. Fastening system according to one of the preceding claims, **characterized in that** the one fastening component (10) is received in the recess (46) of the one profile part (38) in a manner recessed in the direction parallel to its adhesive closure parts (16) such that the other fastening component (58) of the other profile part (70) is sunk in releasable engagement with its adhesive closure parts (60) in the recess (46) in such a way that adjoining adjacent wall parts of the two profile parts (38, 70) are in abutment with one another.

8. Fastening system according to one of the preceding claims, **characterized in that** the other fastening component (58) can be connected to the associated profile part (70) via a latch (64) and is provided on its remaining free head side with a mushroom-head-like closure material (60) that corresponds to the mushroom-head-like closure material (16) of the insertion part (12).

9. Fastening component, provided for a fastening system according to one of the preceding claims, having a mushroom-head-like closure material (16) which, as a flat blank (18), is part of a base or carrier part (20), **characterized in that** the base or carrier part (20) designed as an insertion part (12) is provided at the edge with two boundary strips (22, 24) which provide the possibility of hooked engagement below, and that the insertion part (12) has, at least on its one free end side (30), an arcuate termination which opens out in the direction of the two boundary strips (22, 24) in each case into an adjoining slope (32); and that a pair of line elements (28) extend on the upper side of a boundary strip (22, 24) and project in the direction of the adhesive closure parts (16), which are bounded by two further line elements (28) on the opposite lower side, of which one line element (28) runs along the free longitudinal edge of the associated fastening strip (22, 24) and the other line element (28) is arranged on the opposite side with the adhesive closure parts (16) in the region close to the edge at the transition between the adhesive closure parts (16) and the adjacent boundary strip (22, 24).

## Revendications

1. Système de fixation dévolu à des parties profilées (38, 70), comprenant une partie profilée (38) et une autre partie profilée (70), ainsi qu'un moins deux éléments structurels de fixation (10, 58) munis de pièces respectives (16, 60) de fermeture par adhérence qui peuvent être mises en prise mutuelle avec faculté de dissociation ultérieure, en formant une fermeture par adhérence, l'un (10) desdits éléments structurels de fixation et l'autre élément structurel de fixation (58) pouvant être associés, respectivement, à l'une (38) des parties profilées et à l'autre (70) desdites parties profilées, sachant que l'un (10) des éléments structurels de fixation, conçu en tant que pièce insérable (12) destinée à un évidement (46) pratiqué dans la partie profilée associée (38) précitée, comporte une zone de fermeture (56) pourvue dans ses régions marginales, observée dans la direction d'insertion de l'élément structurel de fixation (10), de deux bandes de délimitation (22, 24) offrant une possibilité d'accrochage par-dessous lors d'une réception par des orifices (52) du type canal, façonnés dans ledit évidement (46) et réservant entre eux ladite zone de fermeture (56), afin de consigner à demeure les pièces (60) de fermeture par adhérence de l'autre élément structurel de fixation (58) sur les pièces (16) de fermeture par adhérence de l'un (10) desdits éléments structurels de fixation, **caractérisé par le fait qu'**une paire d'éléments linéaires (28), s'étendant sur la face supérieure d'une bande de délimitation (22, 24), font saillie dans la direction des pièces (16) de fermeture par adhérence délimitées, sur la face inférieure pointant à l'opposé, par deux autres éléments linéaires (28) au sein desquels un élément linéaire (28) s'étend le long du bord longitudinal libre de la bande de délimitation (22, 24) associée, et l'autre élément linéaire (28) est disposé sur la face pointant à l'opposé avec lesdites pièces (16) de fermeture par adhérence, dans la région proche des bords, à la transition entre lesdites pièces (16) de fermeture par adhérence et la bande de délimitation (22, 24) voisine.

2. Système de fixation selon la revendication 1, **caractérisé par le fait que** la pièce insérable (12) présente, au niveau de sa face extrême libre (30) tournée vers la sortie (48) de l'évidement (46) à l'état inséré, un tracé en arc de cercle, préférentiellement en forme de segment circulaire, s'achevant par un biseau (32) respectif en direction des deux bandes de délimitation (22, 24).

3. Système de fixation selon la revendication 1 ou 2, **caractérisé par le fait que** la pièce insérable (12) s'achève, au niveau de son autre face extrême libre (36) débouchant à l'entrée de l'évidement (46), dans l'affleurement de parois profilées de l'une (38) des parties profilées.

4. Système de fixation selon l'une des revendications précédentes, **caractérisé par le fait que** les deux bandes de délimitation (22, 24) sont au moins partiellement coiffées le long des orifices (52) du type canal, sur leurs bords longitudinaux ou leurs parois latérales (34) considéré(e)s, par des parties de paroi de l'une (38) des parties profilées, avec instauration de la possibilité d'accrochage par-dessous, et comportent des saillies individuelles le long de leur(s) face(s) supérieure et/ou inférieure.

5. Système de fixation selon l'une des revendications précédentes, **caractérisé par le fait que** les saillies individuelles s'étendent au moins partiellement dans la région des orifices (52) du type canal et sont constituées, de préférence, par des éléments linéaires (28) qui dépassent au-delà de la (des) face(s) supérieure et/ou inférieure et s'étendent parallèlement aux parois latérales (34) des bandes de délimitation (22, 24).

6. Système de fixation selon l'une des revendications précédentes, **caractérisé par le fait que** les pièces (16) de fermeture par adhérence de l'un (10) des éléments structurels de fixation sont constituées d'un matériau de fermeture du type tête de champignon qui, conçu en tant que flan découpé (18) du type plaquette, occupe une position stationnaire sur une partie de base (20) de la pièce insérable (12), entre les deux bandes de délimitation (22, 24), sur une platine de consignation à demeure (26) de ladite pièce insérable (12).

7. Système de fixation selon l'une des revendications précédentes, **caractérisé par le fait que** l'un (10) des éléments structurels de fixation est encaissé dans l'évidement (46) de l'une (38) des parties profilées, dans une direction parallèle à ses pièces (16) de fermeture par adhérence, de façon telle que l'autre élément structurel de fixation (58) de l'autre partie profilée (70) soit encaissé dans ledit évidement (46) par ses pièces (60) de fermeture par adhérence, avec faculté de dissociation ultérieure, de telle manière que des parties de paroi des deux parties profilées (38, 70), adjacentes et voisines, soient mutuellement en applique.

8. Système de fixation selon l'une des revendications précédentes, **caractérisé par le fait que** l'autre élément structurel de fixation (58) peut être relié à la partie profilée associée (70) par l'intermédiaire d'un système de crantage (64) et est pourvu, au niveau de sa face frontale libre restante, d'un matériau de fermeture (60) du type tête de champignon qui correspond au matériau de fermeture (16) du type tête de champignon de la pièce insérable (12).

9. Elément structurel de fixation prévu pour un système de fixation conforme à l'une des revendications précédentes, muni d'un matériau de fermeture (16) du type tête de champignon se présentant comme un flan découpé (18) aplati, en tant qu'élément constitutif d'une partie de base ou de support (20), **caractérisé par le fait que** la partie de base ou de support (20) conçue en tant que pièce insérable (12) est dotée, dans ses régions marginales, de deux bandes de délimitation (22, 24) offrant une possibilité d'accrochage par-dessous ; **par le fait que** ladite pièce insérable (12) comporte, au moins au niveau de l'une (30) de ses faces extrêmes libres, une terminaison en forme d'arc de cercle débouchant, respectivement, dans un biseau attenant (32) en direction des deux bandes de délimitation (22, 24) ; et **par le fait qu'**une paire d'éléments linéaires (28), s'étendant sur la face supérieure d'une bande de délimitation (22, 24), font saillie dans la direction des pièces (16) de fermeture par adhérence délimitées, sur la face inférieure pointant à l'opposé, par deux autres éléments linéaires (28) au sein desquels un élément linéaire (28) s'étend le long du bord longitudinal libre de la bande de délimitation (22, 24) associée, et l'autre élément linéaire (28) est disposé sur la face pointant à l'opposé avec lesdites pièces (16) de fermeture par adhérence, dans la région proche des bords, à la transition entre lesdites pièces (16) de fermeture par adhérence et la bande de délimitation (22, 24) voisine.
